# EUROPÄISCHE PATENTANMELDUNG

(11) **EP 0 893 243 A2**
(43) Veröffentlichungstag der Anmeldung: **27.01.1999**
(21) Anmeldenummer: 98113213.7
(22) Anmeldetag: 15.07.1998
(51) Int. Cl.: B32B 3/16

(54) **Schichtstruktur, die als Verpackungs- bzw. Transporteinheit aufrollbar ist, und Verfahren zu deren Herstellung**

(30) Priorität: 23.07.1997 DE 29713113 U
(71) Anmelder: FRÄNKISCHE ROHRWERKE, GEBR. KIRCHNER GmbH & Co., D-97486 Königsberg (DE)
(72) Erfinder: Kess, Manfred, 97486 Königsberg (DE); Pfister, Carsten, 97526 Sennfeld (DE)
(74) Vertreter: Schwabe - Sandmair - Marx

(57) **Zusammenfassung**

Die Erfindung betrifft eine Schichtstruktur (1) mit einer im wesentlichen starren bzw. nur wenig flexiblen Materialschicht (2) und einer flexibleren Materialschicht (3), wobei die beiden Materialschichten miteinander verbunden sind, wobei erfindungsgemäß die im wesentlichen starre bzw. nur wenig flexible Materialschicht (2) mit Einschnitten (4) versehen ist, so daß die Schichtstruktur zu einer im Querschnitt näherungsweise rechteckigen Einheit (10) aufrollbar bzw. faltbar ist.

## Beschreibung

Die vorliegende Erfindung betrifft eine Schichtstruktur gemäß dem Patentanspruch 1, die eine Materialschicht bzw. Funktionsschicht zur Verwendung insbesondere als Dämm-, Isolations- oder Auskleidungsmaterial umfaßt, sowie ein Verfahren gemäß dem Patentanspruch 8 zur Herstellung einer solchen Schichtstruktur.

Übliche Dämm-, Isolations- oder Auskleidungsmaterialien die beim Innen- und Außenausbau verwendet werden, sind zum Zwecke des Transportes, der Lagerung, der Verpackung und dergleichen häufig in Form von Matten ausgebildet und werden zusammengerollt. Andere übliche Baumaterialien, die im wesentlichen starr bzw. wenig flexibel sind, wie z.B. Styropor, werden in Form von Platten in einer bestimmten Größe ausgeliefert.

Wird beispielsweise ein Baumaterial in Form von Platten angeliefert, so weisen diese Platten eine bestimmte Standardgröße auf, die jedoch häufig nicht auf die Gegebenheiten am Installationsort abgestimmt ist. Nachteilig ist, daß die Platten umständlich einzeln gehandhabt und angepaßt werden müssen, was zeit- und kostenaufwendig ist. Außerdem müssen auch die Platten zum Schutz vor mechanischen Beschädigungen und Nässe mit einer Schutz- bzw. Transporthülle umgeben werden, was den Nachteil mit sich bringt, daß Hüllen die Gesamtkosten des Baumaterials erhöhen und sehr zeitaufwendig zum Aufbringen bzw. Entfernen sind. Ferner besteht beim Entfernen der Hüllen beispielsweise mit einem spitzen Gegenstand die Gefahr, daß das Baumaterial beschädigt wird.

Im modernen Hausbau wird zunehmend auf standardisierte Normteile zurückgegriffen, um so die Montagezeiten zu verringern. Dies ist beispielsweise beim Bau von Fertighäusern oder modernen Bürogebäuden mit Installationen, Kabelschächten und Lüftungskanälen in einem Normraster oder bei Fassaden mit transparenter Wärmedämmung (TWD) mit Stütz- bzw. Tragestrukturen in einem Normraster der Fall. Die vorstehend aufgeführten Baumaterialien, beispielsweise Platten, sind jedoch üblicherweise nicht auf diese Normabmessungen abgestimmt, sondern müssen umständlich an diese angepaßt werden.

Aus der EP 0 430 141 B1 ist eine aufrollbare Dämmbahn zur Wärme- und Schalldämmung bekannt, bei der ein plattenartiges Dämmaterial auf eine flexible Schicht aufgeklebt ist. Das plattenartige Dämmaterial ist in rechteckige, zum Teil leistenartige Abschnitte quer zur Längsrichtung der Rolldämmbahn unterteilt, so daß es möglich ist, dieses Material aufzurollen. Hier ergeben sich natürlich wieder Probleme beim Lagern und beim Transport.

Es ist die vordringliche Aufgabe der Erfindung, die Nachteile im Stand der Technik so weit wie möglich zu beseitigen. Angesichts obiger Problemlage hat die Erfindung zum einen die Aufgabe, eine Schichtstruktur bzw. Verbundmaterial zu schaffen, die zu einer Verpackungs- bzw. Transporteinheit gefaltet bzw. gerollt werden kann und die einfach und platzsparend zu lagern, zu transportieren und zu handhaben ist. Auch kann im Falle des Bedarfs eine Funktionsschicht vor mechanischen Beschädigungen, Verschmutzung und Nässe geschützt werden. Eine weitere Aufgabe der Erfindung ist es, durch eine spezielle Vorbehandlung der Funktionsschicht diese einerseits an Normmaße anzupassen und andererseits die Montagezeiten vor Ort zu verkürzen. Eine weitere Aufgabe der Erfindung ist es, eine Materialschicht so vorzubehandeln, daß sie auch ihrerseits als Halte- bzw. Stützstruktur verwendet werden kann und somit das nachträgliche Aufbringen solcher Strukturen überflüssig macht.

Diese Aufgaben werden wenigstens teilweise durch eine Schichtstruktur gemäß dem Patentanspruch 1 sowie durch ein Verfahren zur Herstellung einer solchen Schichtstruktur gemäß dem Patentanspruch 8 gelöst. Weitere bevorzugte Ausführungsformen werden in den auf diese rückbezogenen Unteransprüche beansprucht.

Die gemäß der Erfindung zu erzielenden Vorteile beruhen darauf, daß eine Schichtstruktur bzw. ein Verbundmaterial geschaffen worden ist, die im wesentlichen zwei unterschiedliche Materialschichten umfaßt, und zwar eine im wesentlichen starre bzw. nur wenig flexible Materialschicht (nachfolgend erste Materialschicht genannt) und eine flexiblere Materialschicht (nachfolgend zweite Materialschicht genannt). Diese Materialschichten weisen im allgemeinen unterschiedliche Eigenschaften auf.

Die erste Materialschicht stellt vorzugsweise die eigentliche Funktionsschicht dar und kann ihrerseits beispielsweise als Verbundmaterial ausgebildet sein und mehrere Einzelschichten umfassen. Dieser ersten Materialschicht kommt die eigentliche Aufgabe zu, zu dämmen, zu isolieren, zu verkleiden, etc. Aufgrund der funktionsbestimmenden Eigenschaften ist diese Materialschicht üblicherweise im wesentlichen Start bzw. nur wenig flexibel. Übliche Materialien sind beispielsweise: expandiertes Polystyrol (EPS) bzw. bitumengebundener Partikelschaum vorzugsweise mit aufgeschäumten Polystyrolkugeln. Die zweite Materialschicht ist hingegen flexibler als die erste Materialschicht und kann insbesondere leichter gefaltet werden, als die erste Materialschicht. Der zweiten Materialschicht kommt die Aufgabe zu, die Schichtstruktur zusammenzuhalten, so daß diese insbesondere zu einer Verpackungs- und Transporteinheit gerollt werden kann, und die Funktionsschicht vor mechanischen Beanspruchungen, Nässe und dergleichen zu schützen.

Damit die erfindungsgemäße Schichtstruktur aufgerollt oder gefaltet werden kann, ist die erste, im wesentlichen starre bzw. wenig flexible Materialschicht bevorzugt über ihre gesamte Breite mit Einschnitten versehen. Bevorzugt verlaufen diese Einschnitte senkrecht zur Oberfläche der Schichtstruktur und durchtrennen die erste Materialschicht vollständig, so daß die Schichtstruktur von der zweiten Materialschicht zusammengehalten wird. Wegen der Einschnitte in der ersten Materialschicht ist es möglich, die Schichtstruktur an diesen Einschnitten zu falten und somit die gesamte Schichtstruktur spiralförmig, d. h. von innen nach außen, zu einer Verpackungs- bzw. Transporteinheit mit näherungsweise rechteckigem Querschnitt zusammenzufalten.

Vorteilhaft ist, daß durch das Zusammenrollen bzw. -falten eine hohe Verpackungsdichte erzielt werden kann. Indem die Abstände der Einschnitte geeignet gewählt werden, wird es möglich, die Schichtstruktur mit einem im wesentlichen rechteckigen Querschnitt zusammenzurollen, der beispielsweise auf die Transportbedingungen abgestimmt sein kann. Eine so beschaffene Verpackungs- und Transporteinheit bietet den Vorteil, daß sie nicht wegrollen kann, und daß sie sehr platzsparend gestapelt und gelagert werden kann, da zwischen den einzelnen Einheiten keine ungenützten Totvolumen mehr bestehen.

Bevorzugt wird die Schichtstruktur so zusammengerollt, daß die mechanisch stabilere zweite Materialschicht zur Außenseite der Verpackungs- bzw. Transporteinheit gerichtet ist. Vorteilhaft ist, daß die zweite Materialschicht somit die eigentliche Funktionsschicht vor mechanischen Beanspruchungen, vor Nässe etc. schützen kann, ohne daß eine zusätzliche, kostenaufwendige Außenhülle erforderlich wäre. Es besteht somit auch nicht mehr die Gefahr, daß die Funktionsschicht durch das Entfernen einer Verpackungshülle beschädigt wird.

Weitere bevorzugte Ausführungsformen der Erfindung verwenden Einschnitte mit speziellen Profilen. Im bestimmungsgemäßen Einbauzustand der Schichtstruktur, also üblicherweise der gestreckten Form, können Aussparungen mit beispielsweise dreieckigem oder rechteckigem Querschnitt geschaffen werden. Bevorzugt sind diese Aussparungen und deren Profil an die Form von etwaigen Stütz- und Haltestrukturen angepaßt oder an die Form von Installationen, Kabel- und Lüftungskanälen etc. Bevorzugt sind die Einschnitte in den Schichtstrukruren deshalb so bemessen, daß diese baulicherseits vorgegebene Strukturen bzw. Kanäle oberflächenschlüssig in die erste Materialschicht aufnehmen können. Bevorzugt sind dabei die Abstände der Einschnitte an die Abstände der Strukturen und Kanäle angepaßt.

Vorteilhaft ist, daß somit auf einfache Weise bereits vorhandene Strukturen durch eine Materialschicht abgedeckt werden können, indem eine erfindungsgemäße Verpackungseinheit einfach nur abgerollt wird. Das mühsame Anpassen und Zuschneiden einzelner Platten ist somit nicht mehr erforderlich, so daß erfindungsgemäß eine raschere Montage von Funktionsschichten möglich wird.

Durch Variation einiger weniger Parameter wie bspw. der Abstände, der Profile und der geometrischen Anordnung der Einschnitte kann die Schichtstruktur sehr flexibel an unterschiedliche bauliche Gegebenheiten angepaßt werden.

Bevorzugt sind die beiden Materialschichten fest miteinander verbunden, etwa durch Verkleben oder thermisches Verschweißen bzw. Verschmelzen. Eine weitere bevorzugte Ausführungsform der Erfindung sieht jedoch auch eine lösbare Verbindung der beiden Materialschichten vor. Somit wird es möglich, die Funktionsschicht durch einfaches Abrollen einer Schichtstruktur rasch zu positionieren. So kann beispielsweise eine Isolationsschicht zeitsparend zwischen Dachsparren im Normabstand angebracht werden. Dann wird die Funktionsschicht befestigt und anschließend die zweite Materialschicht abgezogen. Diese Vorgehensweise kann im Vergleich zu dem mühsamen Anbringen einzelner Platten sehr viel rascher erfolgen. Im ersten Fall kann die zweite Materialschicht selbst auch vorteilhafte Eigenschaften haben, beispielsweise isolierende oder dämmende Eigenschaften (Aluminiumfolie, Kunststoffolie oder dergleichen). Im zweiten Fall kann die zweite Materialschicht minderwertig sein.

Durch die zuvor genannte vereinfachte Montage hilft die Schichtstruktur im übrigen sowohl bei der Bauplanung als auch bei der Montage Kosten sparen.

Es sei darauf hingewiesen, daß einzelne Merkmale der Erfindung, wie von den Patentansprüchen beansprucht und nachstehend erläutert, beliebig miteinander kombiniert werden können. Nachfolgend werden bevorzugte Ausführungsformen der Erfindung in beispielhafter Weise unter Bezugnahme auf die beigefügten Figuren erläutert, wobei weitere wesentliche Merkmale zu erkennen sein werden.
- Fig. 1: zeigt eine erfindungsgemäße Schichtstruktur in Draufsicht und in gestreckter Lage (Fig. 1A) sowie in einer Querschnittsansicht (Fig. 1B)
- Fig. 2A-2B: zeigen eine erfindungsgemäße Schichtstruktur, und zwar zusammengerollt zu einer Verpackungs- bzw. Transporteinheit, wobei die erste Materialschicht entweder auf der Außenseite angeordnet ist (Fig. 2A) oder aber auf der Innenseite (Fig. 2B) der Verpackungseinheit.
- Fig. 3A-3D: zeigen bevorzugte Profile der Einschnitte im Querschnitt, und zwar sowohl vor als auch nach dem Falten bzw. Rollen der Schichtstruktur zu einer Verpackungseinheit. Dabei sind ein senkrechter Einschnitt (Fig. 3A), eine V-förmige Aussparung (Fig. 3B), eine keilförmige Aussparung (Fig. 3C) sowie eine rechteckförmige Aussparung (Fig. 3D) dargestellt.
- Fig. 4: zeigt eine weitere bevorzugte geometrische Anordnung der Einschnitte.

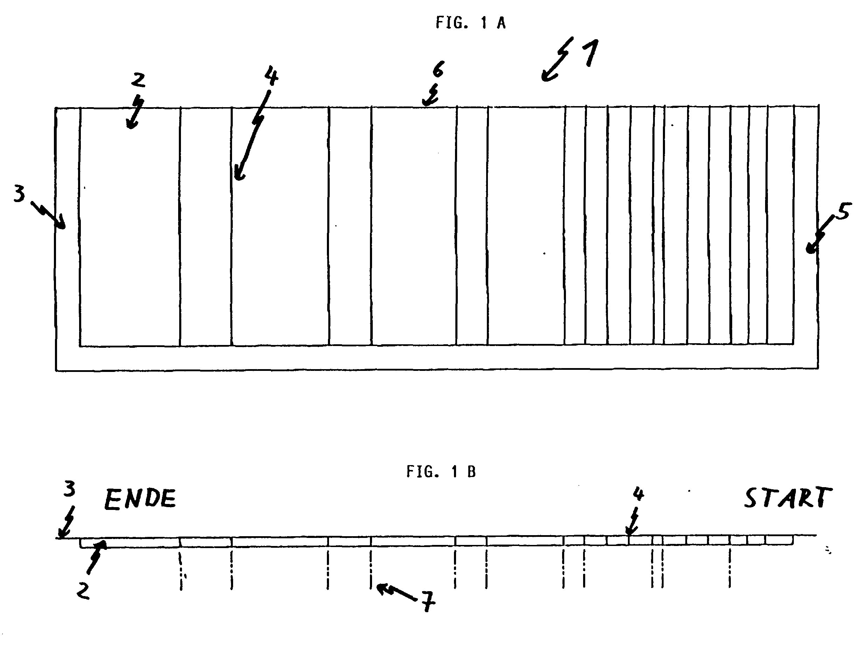

In Figur 1 ist schematisch eine erfindungsgemäße Schichtstruktur bzw. Verbundmaterial (1) in Draufsicht (Fig. 1A) sowie in einer Querschnittsansicht (Fig. 1B) dargestellt. Die Schichtstruktur umfaßt eine erste, im wesentlichen starre bzw. wenig flexible Materialschicht (2) sowie eine zweite, flexiblere Materialschicht (3) auf. Beide Schichten sind entweder fest und unlösbar, bspw. durch Verkleben oder thermisches Verschmelzen bzw. Verschweißen, oder aber mit Hilfe eines üblichen Haftklebers lösbar miteinander verbunden. Als Kleber kommen bspw. Schmelzkleber in Betracht. Zur lösbaren Verbindung kann die zweite Materialschicht (3) auch als dünne, abreißbare Folie bzw. Klebefolie ausgebildet sein oder an nur wenigen Befestigungspunkten mit der Funktionsschicht (2) verbunden sein. Nach der Montage der Schichtstruktur und evtl. nach der Befestigung würde in einem solchen Fall nur noch die erste Materialschicht übrigbleiben. Diese Vorgehensweise kommt der mühsamen und zeitaufwendigen Befestigung einzelner Platten gleich, kann jedoch rascher und kostengünstiger vorgenommen werden.

Bei der ersten Materialschicht (2) handelt es sich in der Regel um die eigentliche Funktionsschicht, die aufgrund ihrer Eigenschaften zur Wärme- bzw. Schalldämmung oder zur Aus- bzw. Verkleidung verwendet werden soll. Bevorzugte Materialien sind beispielsweise expandiertes Polystyrol (EPS), bitumengebundener Partikelschaum vorzugsweise mit aufgeschäumten Polystyrolkugeln oder vorzugsweise aufgeschäumtes Polyurethan.

Die zweite Materialschicht (3) dient vorzugsweise dem Zusammenhalt der Schichtstruktur und ermöglicht das erfindungsgemäße Falten bzw. Zusammenrollen zu einer Verpackungs- bzw. Transporteinheit (10). Bevorzugte Materialien für die zweite Materialschicht (3) sind Folie, vorzugsweise aus Kunststoff und zweckmäßig durch Aufspritzen eines (noch) flüssigen Kunststoffs auf die erste Materialschicht hergestellt, Pappe, Vlies, vorzugsweise aus Mineralfasern, thermisch verfestigtem Spinnvlies vorzugsweise aus thermoplastisschen Stoffen wie Polyester-Endlosfilamenten, Papier oder Gewebe. Die zweite Materialschicht kann jedoch zusätzlich auch andere Funktionen ausüben. Beispielsweise kann diese zur Isolation mit einer Aluminiumfolie beschichtet sein.

Zum Falten bzw. Rollen der Schichtstruktur ist die erste Materialschicht bzw. Funktionsschicht (2) mit mehreren Einschnitten versehen, die sich bevorzugt über die gesamte Breite (5) dieser Schicht erstrecken. Bevorzugt ist die zweite Materialschicht (3) etwas größer als die erste Materialschicht (2), so daß die Schichtstruktur zum Verlegen an ihrem Rand bzw. Stoß (3, 5) ergriffen werden kann. Bevorzugt wird dieser Rand nach dem Verlegen der Schichtstruktur abgetrennt, so daß eine weitere Bahn der Schichtstruktur, seitlich ohne Fuge anschließend, verlegt werden kann. Alternativ kann der Rand jedoch auch belassen werden, um mit einer benachbarten Bahn bzw. einen benachbarten Rand zu überlappen, um insgesamt beispielsweise eine Abdichtung der ersten Materialschicht zur Außenseiten hin zu ermöglichen.

In einer weiteren, in Fig. 1 abgebildeten Ausführungsform schließen jedoch beide Materialschichten an einer Längsseite (6) bündig ab, während die zweite Materialschicht (3) an den beiden Rändern über die erste Materialschicht vorsteht. Eine solche als Bahn ausgebildete Schichtstruktur eignet sich bevorzugt zum Verlegen an Randbereichen. In einer weiteren Ausführungsform schließen die beiden Materialschichten (2, 3) an beiden Langsseiten (6) der Schichtstruktur bündig ab. Eine solche Schichtstruktur kann als Bahn seitlich an die nächste Bahn anschließend verlegt werden, ohne daß die zweite Materialschicht (3) an den Längsseiten (6) der Schichtstruktur abgetrennt werden müßte. Es ist auch vorgesehen, daß beide Materialschichten an allen vier Rändern der Schichtstruktur bündig abschließen.

Die Einschnitte (4) unterbrechen die erste Materialschicht (2) vorzugsweise vollständig.

Hierzu wird die erste Materialschicht entweder mit Hilfe einer Säge, einem Kreismesser, einem statischen Messer oder dergleichen durchtrennt oder mit Hilfe eines heißen Drahtes, der sich über die gesamte Breite der Schichtstruktur erstreckt und von deren Oberfläche her langsam in Richtung der Grenzschicht zwischen beiden Materialschichten abgesenkt wird. Andere bevorzugte Verfahren schließen die Verwendung eines Hochdruckwasserstrahls oder die Verwendung von Laserdioden bevorzugt in einem Absorptionsbereich der ersten Materialschicht ein.

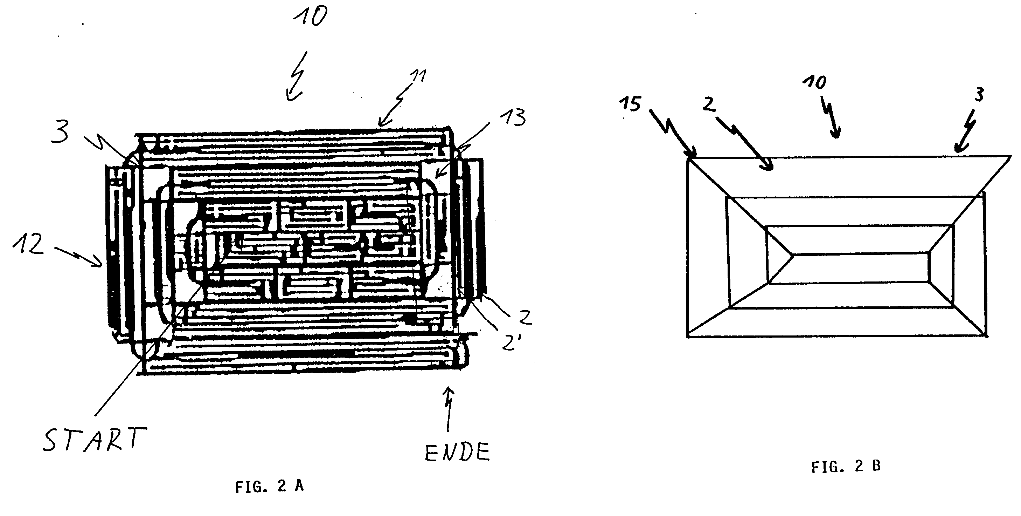

Wie nachfolgend in Figur 2 dargestellt, wird die Schichtstruktur bevorzugt spiralförmig beginnend an einem Ende aufgerollt. Hierzu ist es erforderlich, daß die Abstände der Einschnitte in Aufrollrichtung (6) im wesentlichen kontinuierlich zunehmen. In Fig. 1A verläuft die Aufrollrichtung vom rechten Rand (START) zum linken Rand (ENDE) der Schichtstruktur. Wie jedoch noch beschrieben wird, können einzelne Einschnitte aufgrund ihrer Profilierung auch zur Aufnahme von Strukturen wie etwa Leitungs- oder Lüftungskanälen verwendet werden. Deshalb oder um eine geeignete Transporteinheit auszubilden, wird die Schichtstruktur nicht notwendigerweise an allen Einschnitten (4) gefaltet, sondern nur an einigen Faltlinien (7), wie durch die strichpunktierten Linien in Fig. 1 angedeutet ist.

In einer weiteren bevorzugten Ausführungsform der Erfindung wird auf der anderen Seite der zweiten Materialschicht (3) eine weitere Funktionsschicht (2') angebracht. Damit eine solche Schichtstruktur gleichfalls zu einer Verpackungs- bzw. Transporteinheit aufgerollt werden kann, ist diese weitere Funktionsschicht (2') an den gleichen Bereichen wie die erste Funktionsschicht (2) mit geeignet profilierten Einschnitten (4) bzw. Faltlinien (7) versehen.

Die Figur 2 zeigt zwei bevorzugte Ausführungsbeispiele einer erfindungsgemäßen Verpackungs- bzw. Transporteinheit (10) nach ihrem Zusammenrollen bzw. Zusammenfalten. In Fig. 2A ist die zweite Materialschicht (3) mehrlagig ausgebildet und umfaßt beispielsweise zwei Materialschichten (2, 2'). Diese sind ihrerseits über eine vorzugsweise dehnbare Schicht miteinander verbunden. Beginnend mit dem mit "START" bezeichneten Endabschnitt wird die in Fig. 1 dargestellte Schichtstruktur (1) spiralförmig aufgerollt. Die sich ergebende Einheit (10) weist einen im wesentlichen rechteckigen Querschnitt auf, mit einer durch die Beabstandung der Einschnitte (4) einstellbaren Höhe (12) und Breite (11). Wie in Fig. 2A ersichtlich, wird die Schichtstruktur nur an den dafür vorgesehenen Faltlinien (7) aus Fig. 1B gefaltet.

Wird die in Fig. 2A dargestellte Verpackungseinheit (10) abgerollt, so berühren sich die Einschnitte der beiden Materialschichten (2, 2') nach dem Ausrollen der Schichtstruktur in eine gestreckte Lage, so daß beide Materialschichten jeweils eine geschlossene Oberfläche ohne Fugen ausbilden, die bspw. Kältebrücken darstellen könnten. Wie nachfolgend beschrieben wird, können die Einschnitte jedoch auch so profiliert sein, daß eine bzw. jede Materialschicht (2, 2') nach dem Abrollen der Verpackungseinheit (10) Aussparungen aufweist, um Strukturen darin aufzunehmen.

In Fig. 2A zeigt die erste Materialschicht (2) zur Außenseite der Verpackungseinheit (10). Die dargestellten Hohlräume (14) werden nach dem Abrollen der Schichtstruktur in eine gestreckte Lage vollständig ausgefüllt. Figur 2B zeigt eine weitere bevorzugte Verpackungs- bzw. Transporteinheit (10), bei der die zweite Materialschicht (3) zur Außenseite der Verpackungseinheit zeigt.

Bevorzugt ist die zweite Materialschicht (3) widerstandsfähig, so daß sie die darin vollständig eingeschlossene Funktionsschicht (2) vor mechanischen Beschädigungen und Nässe schützt. Für eine möglichst kompakte Verpackungseinheit verlaufen die Einschnitte (15) bevorzugt unter einem Winkel von 45° relativ zur Oberfläche der Schichtstruktur. Erfindungsgemäß sind jedoch auch andere Profile der Einschnitte vorgesehen, beispielsweise dergestalt, daß die Funktionsschicht beim Zusammenfalten im Bereich der Einschnitte komprimiert wird. Eine solche Verpackungeinheit hätte dann eine natürliche Neigung, sich selbständig zu entfalten.

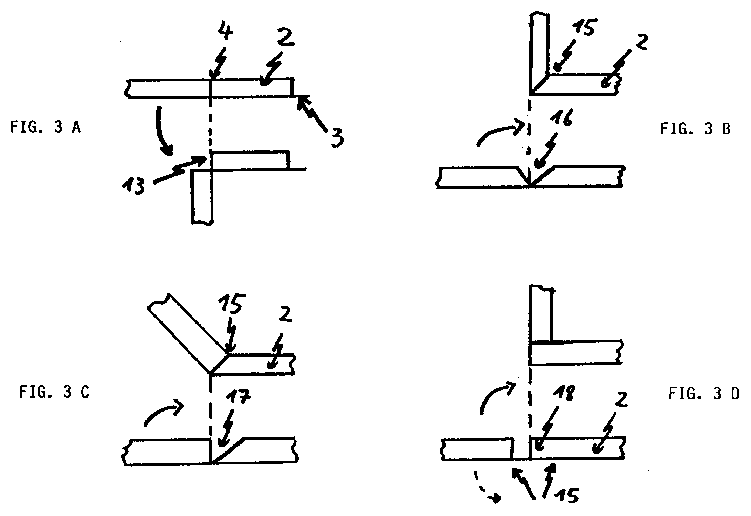

Die Figuren 3A bis 3D zeigen einige bevorzugte Profile der Einschnitte (4), und zwar sowohl vor als auch nach dem Falten bzw. Rollen der Schichtstruktur zu einer Verpackungs- bzw. Transporteinheit.

Ein einfach zu realisierender Einschnitt (4) verläuft im wesentlichen über die gesamte Breite (5) der ersten Materialschicht (2), rechtwinklig zu deren Oberfläche und durchtrennt die erste Materialschicht vorzugsweise vollständig, nicht jedoch die zweite Materialschicht (3). Falls jedoch die erste Materialschicht auch über eine gewisse Flexibilität verfügt, so kann es auch vorgesehen sein, daß die Einschnitte (4) diese Materialschicht nicht vollständig durchtrennen. Wird die beschriebene Schichtstruktur bspw. um 90° gefaltet, so entsteht der in Fig. 2A dargestellte Hohlraum (13) mit quadratischem Querschnitt.

Bei einer weiteren bevorzugten Ausführungsform gemäß Fig. 3B laufen jeweils zwei benachbarte Einschnitte (15) unter einem Winkel von etwa 90° aufeinander zu und treffen sich bevorzugt an der Grenzfläche der beiden Materialschichten (2, 3). Nach dem Entfalten eines solchen Einschnittes entsteht in gestreckter Lage eine Aussparung mit V-förmigem Profil und vorzugsweise einem rechten Winkel.

Wird eine so präparierte Schichtstruktur dergestalt aufgerollt, daß die Funktionsschicht (2) zur Außenseite der Verpackungseinheit (10) zeigt, wie in Fig. 2A dargestellt, so kann die Funktionsschicht auf eine Unterlage abgerollt werden, wobei die Einschnitte zur Unterlage hin gerichtet sind. Diese Schichtstruktur ist deshalb geeignet, Strukturen mit dreieckigem Profil, beispielsweise Dachsparren, Leitungskanäle oder dergleichen, abzudecken. Zeigt die Funktionsschicht (2) dagegen zur Innenseite der Verpackungseinheit (10), wie in Fig. 2A dargestellt, so wird die zweite Materialschicht (3) zweckmäßig auf die Unterlage, z.B. einen Estrich oder eine Außenfassade, abgerollt und die Schichtstruktur weist nach dem Abrollen Aussparungen mit dreieckigem Querschnitt zur Aufnahme bzw. Verkleidung von dreieckigen Strukturen auf. Bevorzugt sind die Aussparungen (16, 17, 18) an diese Strukturen eng anliegend angepaßt.

Die Figur 3C zeigt eine weitere bevorzugte Profilierung der Einschnitte, bei der jeweils zwei benachbarte Einschnitte unter einem Winkel von 45° aufeinander zulaufen und sich in der Nähe der Grenzschicht zwischen den beiden Materialschichten (2, 3) treffen. Die entstehende Aussparung (17) weist gleichfalls einen dreieckigen Querschnitt auf. Diese Profilierung ermöglicht eine Verpackungseinheit mit hexagonalem Querschnitt, die ebenfalls stabil gelagert werden kann, die jedoch leichter gerollt werden kann als eine Verpackungseinheit mit rechteckigem Querschnitt (Fig. 2). Durch geeignete Profilierung der Einschnitte ermöglicht die Erfindung jedoch auch Verpackungseinheiten mit einem anderen Querschnitt.

Die Figur 3D zeigt eine weitere bevorzugte Profilierung der Einschnitte, bei der jeweils zwei benachbarte Einschnitte (15) im wesentlichen senkrecht zur Oberfläche der Funktionsschicht (2) verlaufen und diese bevorzugt vollständig unterbrechen. Vor dem Aufrollen zu einer Verpackungseinheit wird die Funktionsschicht (2) zwischen den beiden Einschnitten (15) entfernt, so daß eine Aussparung (18) mit rechteckigem Querschnitt übrigbleibt. Die Lange dieser Aussparung entspricht vorzugsweise der Stärke der Funktionsschicht (2), so daß sich nach dem Zusammenfalten die gezeigte Einheit ergibt.

Durch die Wahl der Abstände der beiden Einschnitte (15) kann diese Aussparung (18) jedoch auch an die Normabmessungen bzw. Normabstände von Balken, Halte- bzw. Stützstrukturen, Installations- bzw. Kabelschächten, Lüftungskanälen und dergleichen angepaßt werden. Es ist somit möglich, solche Strukturen sehr rasch abzudecken, einfach indem eine erfindungsgemäße Verpackungseinheit (10) abgerollt wird.

In den Figuren 3A - 3D wurde dargestellt, daß die Schichtstruktur (10) bevorzugt in gestreckter Lage installiert wird. Bei anderen Verwendungszwecken ist es jedoch erforderlich, daß sich die Schichtstruktur der Kontur einer Oberfläche anpaßt, bspw. beim Auskleiden bzw. Isolieren eines Daches. Zur Aufnahme bzw. Verkleidung von Strukturen kann die erfindungsgemäße Schichtstruktur bei einer solchen Verwendung auch anders profilierte Einschnitte (4, 15) aufweisen, als in den Teilfiguren 3A bis 3D dargestellt.

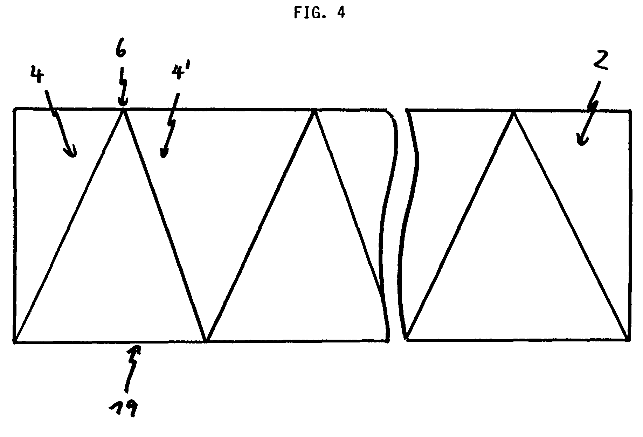

Figur 4 zeigt eine weitere bevorzugte geometrische Anordnung der Einschnitte, bei der sich zwei Einschnitte (4, 4') unter Einschluß eines Winkels von vorzugsweise 90° an einer der Längsseiten (6, 19) der Schichtstruktur treffen, und zwar abwechselnd an gegenüberliegenden Längsseiten (6, 19).

Eine solche geometrische Anordnung kann beispielsweise zur Abdeckung dann erforderlich sein, wenn sich Stütz- bzw. Haltestrukturen zur Versteifung von Oberflächen regelmäßig kreuzen. Bei anderer Anordnung solcher Strukturen können die Einschnitte einer erfindungsgemäßen Schichtstruktur jedoch auch anders angeordnet sein. Durch geeignete Profilierung der Einschnitte (4, 4') können diese im entfalteten Zustand Aussparungen zur Aufnahme bzw. Verkleidung der Stütz- bzw. Haltestrukturen vorgeben. Die in Fig. 4 dargestellte Schichtstruktur wird bevorzugt zieharmonikaartig aufgefaltet, so daß sich eine Verpackungseinheit mit in Draufsicht dreieckiger Grundfläche ergibt.

Während die Erfindung vorstehend im Zusammenhang mit der Verkleidung bzw. Isolation einer Hausfassade beschrieben wurde, sind auch anderen Verwendungsformen der erfindungsgemäßen Schichtstruktur mit eingeschlossen, beispielsweise die Innenisolation eines Hausdaches, die Verkleidung einer Gebäudeinnenwand, die Abdeckung von Installationen in einem Kfz-Innenraum oder auf einem Estrich. Eine bevorzugte Anwendung der erfindungsgemäßen Schichtstruktur erfolgt bei der vollflächigen Außenisolation eines Hausfundaments zur Drainage, wobei die Funktionsschicht eine porige Sickerschicht darstellt, die der Hausaußenwand zugewandt ist, und die zweite Materialschicht ein Filtervlies darstellt, die vorzugsweise einen verzögerungsfreien Wasserübertritt vom umgebenden Erdreich in die Sickerschicht sicherstellt.

Zusammenfassend ist eine Schichtstruktur bzw. ein Verbundmaterial geschaffen worden, die aus einer im wesentlichen starten bzw. wenig flexiblen Materialschicht (Funktionsschicht) und aus einer damit verbundenen flexibleren Materialschicht besteht. Die erste Materialschicht weist Einschnitte auf, die geeignet profiliert sein können. An diesen Einschnitten wird die Schichtstruktur gefaltet bzw. umgeknickt und spiralförmig zu einer kompakten und stapelbaren Verpackungs- bzw. Transporteinheit aufgerollt. Die flexiblere Materialschicht hält diese Einheit zusammen und schützt zugleich die Funktionsschicht, beispielsweise vor mechanischen Beschädigungen, Schmutz und Nässe. Außerdem betrifft die Erfindung ein Verfahren zur Herstellung einer solchen Schichtstruktur.

## Patentansprüche

1. Schichtstruktur (1) mit
- einer im wesentlichen starren bzw. nur wenig flexiblen Materialschicht (2) und
- einer flexibleren Materialschicht (3), wobei
- die beiden Materialschichten miteinander verbunden sind,
dadurch gekennzeichnet, daß
die im wesentlichen starre bzw. nur wenig flexible Materialschicht (2) mit Einschnitten (4) versehen ist, so daß die Schichtstruktur zu einer im Querschnitt näherungsweise rechteckigen Einheit (10) aufrollbar bzw. faltbar ist.

2. Schichtstruktur gemäß Anspruch 1, dadurch gekennzeichnet, daß die Einschnitte (4) im wesentlichen parallel und im wesentlichen über die gesamte Breite (5) der starren bzw. wenig flexiblen Materialschicht (2) verlaufen, oder daß sich jeweils zwei Einschnitte (4,4') unter Einschluß eines Winkels von etwa 90° an einer Längsseite (6, 19) der im wesentlichen starren bzw. nur wenig flexiblen Materialschicht (2) treffen, und zwar abwechselnd an gegenüberliegenden Längsseiten (6, 19) dieser Materialschicht.

3. Schichtstruktur gemäß einem der Ansprüche 1 oder 2, dadurch gekennzeichnet, daß die Einschnitte (4) die im wesentlichen starre bzw. wenig flexible Materialschicht (2) im wesentlichen vollständig durchtrennt, wobei bevorzugt eine Aussparung (16, 17, 18) vorgesehen ist, die eine winklige Anordnung benachbarter Abschnitte der starren bzw. wenig flexiblen Materialschicht (2) ermöglicht.

4. Schichtstruktur gemäß einem der Ansprüche 1 bis 3, gekennzeichnet durch eine Klebeschicht zwischen den beiden Materialschichten (2, 3), um die beiden Materialschichten miteinander zu verbinden.

5. Schichtstruktur gemäß einem der Ansprüche 1 bis 4, dadurch gekennzeichnet, daß die Abstände, in denen die parallel verlaufenden Einschnitte (14) bzw. Paare benachbarter Einschnitte (15) angeordnet sind, längs einer Längsseite (6) der Schichtstruktur im wesentlichen kontinuierlich zunehmen, so daß die Schichtstruktur im verpackten Zustand bevorzugt im wesentlichen im Querschnitt einem Rechteck angenähert ist.

6. Schichtstruktur gemäß einem der vorhergehenden Ansprüche, dadurch gekennzeichnet, daß die im wesentlichen starre bzw. wenig flexible Materialschicht (2) aus expandiertem Polystyrol (EPS) bzw. aus bitumengebundenem Partikelschaum vorzugsweise mit aufgeschäumten Polystyrolkugeln besteht, bzw. daß die flexiblere Materialschicht (3) aus thermisch verfestigtem Spinnvlies vorzugsweise aus thermoplastischen Stoffen besteht.

7. Schichtstruktur gemäß einem der vorhergehenden Ansprüche, gekennzeichnet durch eine weitere im wesentlichen starre bzw. wenig flexible Materialschicht (2'), die ebenfalls mit der flexibleren Materialschicht (3) verbunden ist, mit Einschnitten dort versehen, wo auch die andere im wesentlichen starre bzw. wenig flexible Materialschicht (2) mit Einschnitten versehen ist, bzw. durch eine weitere, flexible und dehnbare Materialschicht, die mit der im wesentlichen starren bzw. wenig flexiblen und mit Einschnitten versehenen Materialschicht (2) verbunden ist, und zwar auf der anderen Seite der flexibleren Materialschicht (3), um die im wesentlichen starre bzw. wenig flexible Materialschicht (2) zu schützen.

8. Verfahren zur Herstellung einer Verpackungs- bzw. Transporteinheit aus einer Schichtstruktur, insbesondere nach einem der Ansprüche 1 bis 7, mit einer im wesentlichen starren bzw. wenig flexiblen Materialschicht (2) und einer flexibleren Materialschicht (3), mit den folgenden Schritten:
- die beiden Materialschichten (2, 3) werden miteinander verbunden,
- die starre bzw. wenig flexible Materialschicht (3) wird unterbrochen, beispielsweise durch Einschnitte, und
- die Schichtstruktur wird zu einer Verpackungs- bzw. Transporteinheit gerollt bzw. gefaltet.

9. Verfahren gemäß dem Anspruch 8, bei dem die starre bzw. wenig flexible Materialschicht (2) insbesondere unter einem Winkel von etwa 45° relativ zu ihrer Oberfläche eingeschnitten wird, und zwar bevorzugt mit einem der nachfolgenden Trennschritte:
a) die starre bzw. wenig flexible Materialschicht (2) wird mit Hilfe einer Säge, insbesondere Kunststoffsäge, oder einem statischen Messer oder einem Kreismesser unterbrochen bzw. eingeschnitten;
b) die starre bzw. wenig flexible Materialschicht (2) wird mit Hilfe eines heißen Drahtes unterbrochen bzw. eingeschnitten, der sich im wesentlichen über die gesamte Breite (5) der starren bzw. wenig flexiblen Materialschicht (2) erstreckt und von deren Oberfläche her in Richtung der Grenzfläche zwischen den beiden Materialschichten abgesenkt;
c) die starre bzw. wenig flexible Materialschicht (2) wird mit Hilfe eines Hochdruckwasserstrahls unterbrochen bzw. eingeschnitten;
d) die starre bzw. wenig flexible Materialschicht (2) wird mit Hilfe eines Lasers, insbesondere Diodenlasers, unterbrochen bzw. eingeschnitten.

10. Verfahren gemäß einem der Ansprüche 8 oder 9, bei dem die beiden Materialschichten (2, 3) mit einer Klebeschicht im Bereich der Schnittflächen und/oder an den Oberflächen der starren Materialschicht versehen werden.

11. Verfahren gemäß einem der Ansprüche 8 bis 10, bei dem die im wesentlichen starre bzw. wenig flexible Materialschicht (2) so eingeschnitten wird, daß die Abschnitte dieser Materialschicht (2) ungleichmäßig groß, aber mit der Tendenz zum Größeren dimensioniert sind, so daß sie im aufgerollten Zustand eine im Querschnitt bevorzugt rechteckige Form ergibt (relativ zu dem Anfang der aufgerollten Schichtstruktur).

12. Verfahren nach einem der Ansprüche 8 bis 11, dadurch gekennzeichnet, daß Aussparungen als Einschnitte in die Materialschicht (2) eingebracht werden.
